# EUROPEAN PATENT SPECIFICATION

(11) **EP 1 194 223 B1**
(45) Date of publication and mention of the grant of the patent: **06.05.2004**
(21) Application number: 00942931.7
(22) Date of filing: 16.06.2000
(51) Int. Cl.: B01J 8/18, C02F 3/12, B01J 8/20

(54) **FLUIDIZING REACTOR AND METHOD FOR TREATMENT OF FLUIDS**
FLIESSBETTREAKTOR UND VERFAHREN ZUM BEHANDELN VON GASEN
REACTEUR A LIT FLUIDISE ET PROCEDE DE TRAITEMENT DE FLUIDES

(30) Priority: 16.06.1999 US 139437
(43) Date of publication of application: 10.04.2002
(73) Proprietor: Marine Biotech Incorporated, Beverly, MA 01915 (US)
(72) Inventor: HELWIG, Neil, Mason , OH 45040 (US)
(74) Representative: Barnfather, Karl Jon, Dr.
(86) International application number: PCT/US2000/016805
(87) International publication number: WO 2000/076655

(56) References cited:
- DD-A- 235 565
- FR-A- 2 751 320
- LU-A- 46 629
- US-A- 3 251 337
- US-A- 4 665 632

## Description

### Technical Field

The present invention relates to fluidizing reactors, and more particularly, to granular bed reactors designed to treat fluids with hydraulic efficiency. The present invention also relates to methods for treatment of fluids.

### Background Art

While Fluidized Bed Reactors, and in particular, Fluidized Sand Beds (FSBs) have played an important role in the evolution of Recirculation Aquaculture Systems (RAS), there have been complications associated with the use of FSBs. Conventional FSBs have been used most often for biological filtration in RAS, for instance, to treat culture water used to raise aquatic organisms. The concept behind FSBs is to expose the culture water to a very large surface area in a small volumetric space during the treatment process. For example, having a one cubic meter of bed of sand for FSBs can provide up to about 25,000 square meters of available surface area, depending on the size of the sand granules. The available surface area from the sand granules provides a habitat for specialized bacteria that, for instance, can oxidize toxic ammonia excreted in the biomass in the culture water, and convert it into non-toxic substances. The amount of ammonia that can be oxidized is generally proportional to the amount of surface area available for the bacteria to populate.

FSBs exposes the available surface area provided by the granules by "fluidizing" the sand bed within a column. In particular, fluid to be treated may be introduced through the bottom of the sand bed at a rate which is sufficient to lift and suspend the granules as the fluid travel through the sand bed. The once packed or "static" sand bed now becomes a viscous, fluid substance with a clearly defined volume within the flowing column of fluid. As the sand bed becomes fluidized, the granules of sand are separated from one another with much of the surface area on each granule exposed. A static sand bed, on the another hand, is packed, so as to cover most of the surface area on each granule. In addition to having an increased the amount of surface area, the fluidized sand bed generally has a volume greater than that of the static sand bed.

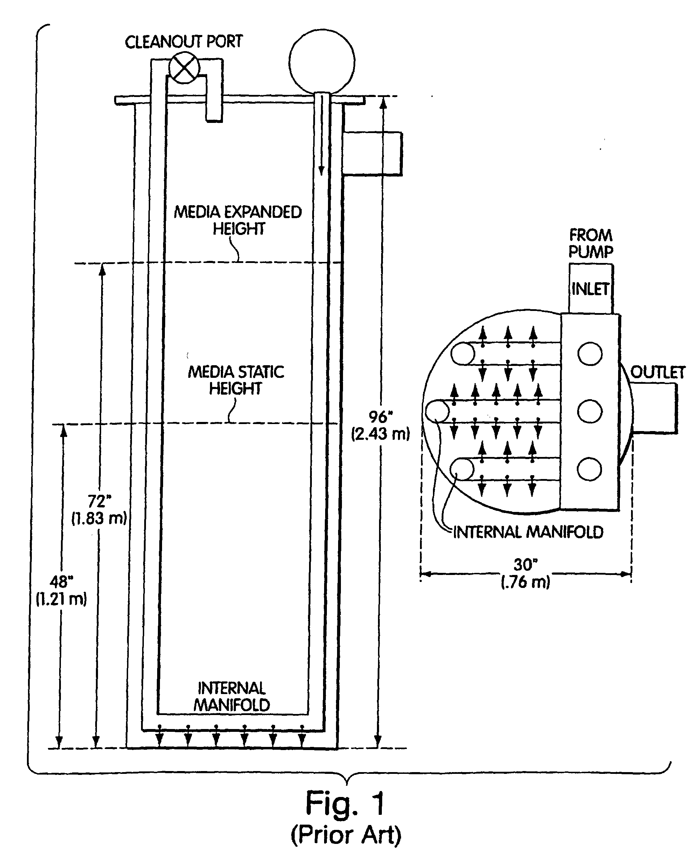

Despite its simplicity, the application of FSBs can often be frustrating and complicated. Conventional FSBs, such as that shown in Figs. 1A-B, utilize an internal manifold system with extensive plumbing to direct fluid to be treated through the manifold. In particular, the manifold is usually placed beneath the sand bed, at the bottom of the reactor, with fluid feeding pipes extending from the top of the reactor down to the manifold. Upon feeding of untreated fluid to the manifold for fluidizing the sand bed, there is significant pressure loss due to the piping design, as well as the outlet design on the manifold. In addition, fluid velocity through the outlets on the manifold can be high, as the outlets have smaller diameters than the diameter of the manifold, and can be extremely abrasive. The abrasive characteristics of fluid at high velocities in the presence of sand has been attributed to catastrophic destruction of FSB reactors and the concrete floors upon which they are built. An increase in fluid velocity can also cause uneven distribution of fluid into the sand bed, which can lead to the generation of zones of turbulence in the sand bed. The presence of turbulence in the sand bed can decrease hydraulic efficiency, as well as performance of the sand bed by creating an inhospitable environment for the bacteria on the sand granules. In addition, as the manifold system is used over time, particulates in the untreated fluid can clog the outlets in the manifold. Moreover, the placement of the manifold in the sand bed can further lead to clogging of the outlets with sand upon shut down. To clean out the manifold, additional complex piping is usually necessary for accessing the manifold from the top of the reactor. The addition of expensive piping and the need for frequent cleaning of the manifold can add to the cost of operating the reactor.

US 3251337 describes a method of using a spiral fluidized bed for coating refractory particles. US 4665632 describes apparatus for uniformly distributing fluid through a bed of particulate material. LU-A-46629 discloses a process and apparatus for contacting liquids and particles.

Accordingly, it is desirable to provide a fluidizing reactor which can uniformly introduce and distribute fluid through the sand bed, and adequately reduce the velocity of the fluid therethrough, so as to increase hydraulic efficiency of the reactor, decrease operating cost, and generate a more hospitable environment for reactions to be carried out.

### Summary of the Invention

The present invention provides a fluidizing reactor for treatment of fluid. In one aspect the invention comprises a fluidizing reactor according to Claim 1.

The plenum may be situated circumferentially about an outer surface of the column. Alternatively, the plenum may be configured to be positioned circumferentially about the interior chamber of the column. The configuration of the plenum can induce a substantially uniform flow pattern, as fluid introduced into the plenum is permitted to flow in a cyclonic path circumferentially about the column. To introduce fluid into the plenum, the fluidizing reactor may be provided with an inlet in communication with the plenum. The inlet may be positioned tangentially to the plenum, so as to impart a cyclonic flow to the fluid introduced therethrough. The fluidizing reactor may further include an annulus which extends circumferentially about the column. The annulus provides an opening through which fluid may exit the plenum and flows upwardly into the interior chamber of the column.

A flow director may be provided about the annulus, so that fluid exiting through the annulus may be directed toward the center of the interior chamber. Such a flow director may permit the flow of fluid into the interior chamber to approximate a "plug-flow" pattern. In other words, at any cross-sectional portion through the interior chamber, the rate of flow moves substantially uniformly upward along the column. The reactor may also include a deflector concentrically aligned within the interior chamber and adjacent the annulus. The presence of the deflector improves the flow of fluid from the annulus upwardly and toward a center of the interior chamber. The fluidizing reactor may further include a bed of treating material for treating the fluid introduced into the reactor. The material can be any granular material that is substantially denser than the fluid within the interior chamber. The reactor may also be provided with an outlet in communication with the interior chamber of the column through which fluid moving upwardly from within the interior chamber may be removed therefrom.

The fluidizing reactor may include a system for treatment of fluid. The system may include a source of fluid to be treated and a first pathway in fluid communication with the source. The first pathway provides a route along which fluid can be directed into the fluidizing reactor through an inlet of the reactor. Fluid moving from the source along the first pathway may, in one embodiment, be facilitated by gravity. Alternatively, a pressurizing mechanism may be employed to facilitate the flow of fluid flow along the first pathway. The system further includes a second pathway for directing fluid from within the reactor through an outlet. In connection with the fluid being removed from within the reactor, a second pressurizing mechanism may be provided for pressurizing fluid within the reactor, so as to facilitate removal of fluid through the outlet. The system may further include a receptor for receiving fluid from the second pathway. Where for instance, the system is a closed system, the source of fluid to be treated may also act as the receptor of fluid from the second pathway. Where the system may include additional fluid treatment devices, the receptor and the source may be other treatment devices.

In another aspect the invention comprises a method for treatment of fluid according to Claim 15. The method may involve generating a flow direction for the fluid to be treated, which flow direction approximates a cyclonic pattern. Subsequently, the fluid may be permitted to follow a spiral path downward, while the cyclonic pattern is maintained. Thereafter, the flow direction may be directed upwardly and centrally through the cyclonic pattern. Preferably, the upward flow follows a plug-flow pattern, during which a treatment material may be introduced into the flow to treat the fluid. The fluid to be treated may be introduced from a source to into an interior chamber of a fluidizing reactor at an upper portion of the interior chamber. The fluid may thereafter be subjected to a downward flow through a bed of granular treatment material positioned at a bottom portion of the interior chamber. The fluid may next be directed through an annulus and into a plenum situated circumferentially about a bottom end of the reactor. The fluid may then be permitted to flow upward within the plenum and removed from the plenum through an outlet.

### Brief Description of the Drawings

Figs. 1A-B illustrate a longitudinal and top view of a prior art fluidizing reactor.
Fig. 2A illustrates a longitudinal view of a fluidizing reactor in accordance with one embodiment of the present invention.
Fig. 2B illustrates a top view of the fluidizing reactor shown in Fig. 1A.
Fig. 3 illustrates a longitudinal view of a fluidizing reactor in accordance with another embodiment of the present invention.
Figs. 4-6 illustrate various systems of the present invention for the treatment of fluid.

### Detailed Description of Specific Embodiments

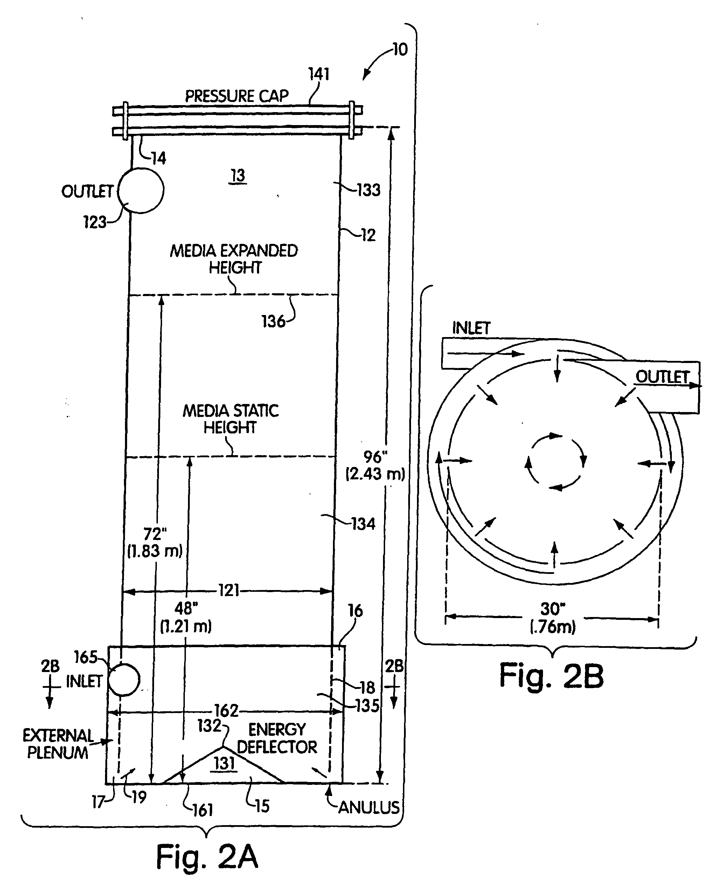

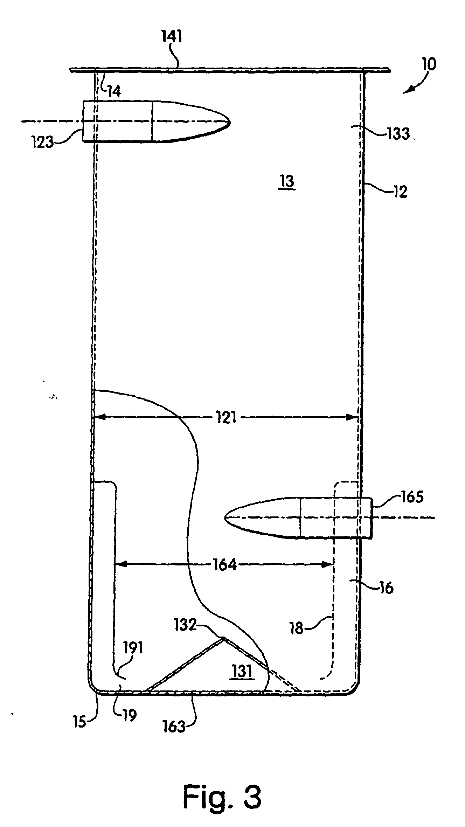

Referring now to the drawings, there are shown in Figs. 2A-B a fluidizing reactor 10, in accordance with one embodiment of the present invention for treatment of fluid. The fluidizing reactor 10 includes a column 12, which column is provided with an interior chamber 13 extending between a first end 14 and a second end 15 of the column 12. The column 12, in accordance with one embodiment, may be substantially cylindrical in shape along its entire length. Although shown to be substantially cylindrical, it should be appreciated that the column may be provided with any geometrical shape along its length, so long as the shape permits the column to maintain fluid to be treated therein. The fluidizing reactor 10 also includes a plenum 16 for receiving fluid introduced into the fluidizing reactor 10. The plenum 16 is situated circumferentially about the second end 14 of the column 12, and includes a lower end 17. As shown in Figs. 2A-B, the plenum 16 may be situated circumferentially about an outer surface 18 of the column 12. In the configuration shown in Fig. 2A, it should be appreciated that the plenum 16 may be provided with a surface 161 extending across the lower end 17 of the plenum 16, and may be provided with a diameter 162 which is relatively larger than a diameter 121 of the column 12. In an alternative embodiment, the plenum 16 may be situated circumferentially about the interior chamber 13, as illustrated in Fig. 3. In this embodiment, the plenum 16 may be provided with a surface 163 which extends across the second end 15 of the column 12. The plenum 16, in this embodiment, includes a diameter 164 which is smaller relative to the diameter 121 of column 12. The plenum 16, whether it is positioned along the outer surface 18 (as shown in Figs. 2A-B) or along the interior chamber 13 (as shown in Fig. 3), may be configured to induce a substantially uniform flow pattern to the fluid introduced into the plenum. In particular, as fluid is introduced into the plenum 16, the fluid is directed along the plenum wall, causing the fluid to flow at a substantially uniform velocity circumferentially about the column 12. It should be noted that the plenum 16 does not necessarily have to have a constant diameter from its top to its lower end 17. However, its configuration should permit the plenum 16 to maintain a cyclonic flow pattern of substantially uniform velocity.

To introduce fluid to be treated into the plenum 16, an inlet 165 is provided. The inlet 165, in one embodiment, may be positioned in tangential communication with the plenum 16. The tangential position of the inlet 165 relative to the plenum 16 permits the fluid entering into the plenum 16 to flow along the wall of the plenum, resulting in a cyclonic flow circumferentially about the column 12. The fluidizing reactor 10 further includes an annulus 19 situated about the second end 15 of the column 12. As shown in Figs. 2A and 3, the annulus is positioned between the second end 15 of the column 12 and the lower end 17 of the plenum 16, so as to provide an opening through which fluid may flow from the plenum 16 upwardly into the interior chamber 13. The annulus 19, in a preferred embodiment, is provided with a dimension sufficient to allow fluid to exit therethrough at a velocity relatively higher than the velocity of fluid circulating within the plenum 16. The velocity of the fluid exiting the annulus 19, in one embodiment, may be within a range of up to approximately 25.0 ft/sec². In this manner, fluid flowing through the annulus 19 may be uniformly distributed into the interior chamber 13. Despite the higher velocity through the annulus 19, fluid exiting through the annulus 19 is substantially less than the velocity of fluid moving through the holes of a conventional manifold, such as that shown in Fig. 1. In particular, the reduction in velocity over the conventional manifold may be from about 85% to 95% less. The ability of the annulus 19 to reduce fluid velocity over conventional reactors, while providing uniform distribution of the fluid with substantially little or no change between the velocity of fluid within the plenum and the velocity of the fluid exiting the plenum, can lead to increase hydraulic efficiency and significant energy savings. Furthermore, the reduction in the velocity of the fluid can decrease the likelihood of damage to the reactor 10 by fast moving fluid.

A flow director 191, as shown in Fig. 3, may be provided along the annulus 19 to facilitate the flow of fluid from the plenum 16 into the interior chamber 13. In one embodiment of the invention, the flow director 191 may be placed along the entire circumference of the annulus 19 to direct the flow of fluid toward a central area of the interior chamber 13 through which axis X extends. The flow director 191 may also help to facilitate the transition of fluid flow from the plenum 16 into the interior chamber 13 by permitting the fluid to follow a relatively laminar flow pattern along the director 191 into the interior chamber 13. By allowing the fluid flow to follow a relatively laminar pathway, the amount of turbulent flow into the interior chamber 13 may be reduced. With a reduction in turbulent flow, fluid entering the interior chamber 13 may approximate a plug-flow pattern as it travels upward along the column 12. In other words, along any cross-sectional portion across the interior chamber 13, the rate of flow moves substantially uniformly upward along the column 12. It should be appreciated that although the flow across the annulus may be relatively laminar, the direction of the fluid flow, as illustrated in Fig. 2B, may still follow a cyclonic pattern upward along the interior chamber 13.

To further enhance the upward flow of fluid once across the annulus 19 and toward the axis X, the fluidizing reactor 10 may be provided with a deflector 131. The deflector 131, as shown in Figs. 2A and 3 may be positioned within the interior chamber 13 and adjacent the annulus 19, such that the deflector 131 is in axial alignment with the column 12. The deflector 131 may include a slope rising away from the annulus 19 toward the axis X, and terminating in apex 132. In accordance with an embodiment of the present invention, the deflector 131 may be include a slope rising at about a 35° angle and may include a diameter which is approximately 70% to 75% of the diameter 121 of the column 12. The deflector 131 may be conical in shape; however, it may have other geometric shapes, for instance, square, pentagonal, or hexagonal, so long as its shape provides the deflector 131 with the ability to deflect fluid flow from the annulus 19 upwardly and toward the axis X.

As fluid flows upwardly along the interior chamber 13, the fluid within upper portion 133 of the chamber 13 may be pushed through an outlet 123. The presence of the outlet 123 permits the level of fluid within interior chamber 13 to be maintained below a point of overspill. Should it be desirable to direct the flow of fluid exiting the outlet 123 to a level higher than the level of the outlet 123, the fluidizing reactor 10 may be provided with an enclosure 141 across the first end 14 of the column 12. The placement of the enclosure 141 across the first end 14 acts to pressurize the fluid within the interior chamber 13. As a result, fluid exiting the outlet 123 can be forced to a level higher than that of the outlet 123, for instance, into a receptor. To ensure its secure engagement to the first end 14, the enclosure 141 may be provided with any securing mechanism available in the art, for example, screws and bolts, complementary screw threads between the enclosure and the column, or bonding substances.

As the fluidizing reactor 10 of the present invention may be used in various industries for various treatment applications, for example, chemical or biological, toxic or nontoxic, the fluidizing reactor is preferably made from a material which is compatible with the fluid being treated and which is substantially corrosion-resistant. Moreover, as the fluidizing reactor 10 must withstand large volume of fluid flow, the material used in the construction of the reactor 10 must be sufficiently strong to provide support along and throughout the reactor 10. Accordingly, materials which may be used include, but are not limited to metal, molded plastic, and thermoset, including thermoplastics and fiberglass. In an embodiment wherein fiberglass material is used, the fiberglass material may include approximately 40% to 75% commercially available FDA approved resin (Fib-Chem, Monessen, PA), and approximately 25% to 60% glass fibers. A small amount (e.g., about 0.5% to 2%) of a catalyst, such as methyl ethyl ketone peroxide (MEKP) (Fib-Chem, Monessen, PA) may be used to cure the FDA approved resin.

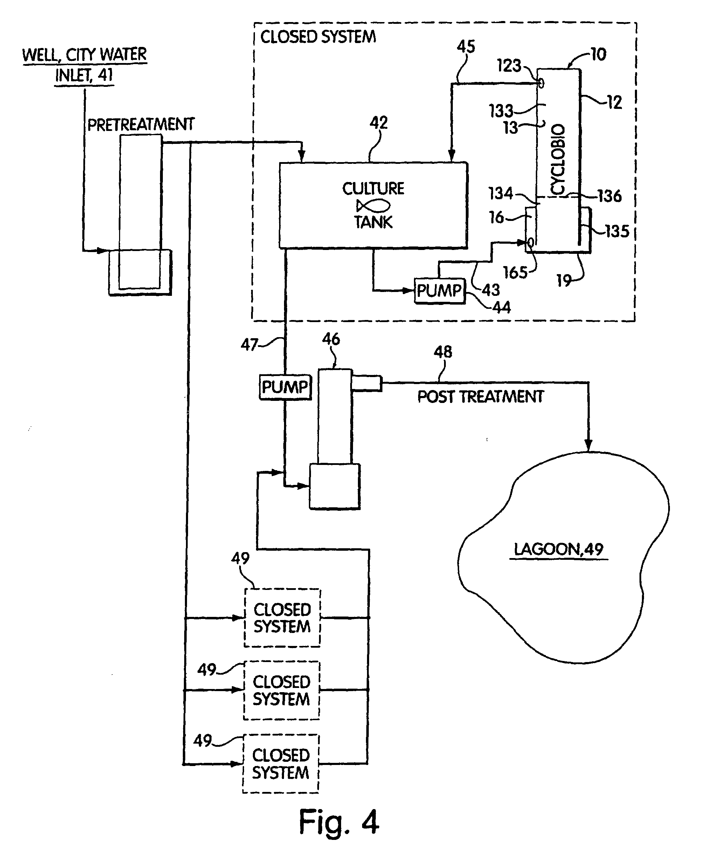

Referring now to Fig. 4, the fluidizing reactor 10, in accordance with an embodiment of the present invention, may be used within a system 40 for the treatment of biological fluid, for instance, in an aerobic nitrification process or an anaerobic denitrification process. As shown in Fig. 4, the fluidizing reactor 10 receives fluid to be treated from a source 41, such as a well, or source 42, such as an aquaculture tank. For the ease of discussion, the system 40 discussed herein after will be in connection with a closed loop system. However, it should be understood that the fluidizing reactor 10 may be part of an open system or a system wherein several fluidizing reactors 10 may be used.

Still looking at Fig. 4, fluid from the source 42 may be directed to the fluidizing reactor 10 along a pathway 43. Fluid from the pathway 43 may next be introduced into the reactor 10 through the inlet 165. Fluid moving along the pathway 43 to the inlet 165, in one embodiment, may be facilitated by gravity if the source 42 and the pathway 43 are positioned generally at a level higher than the level of the inlet 165. Alternatively, a pressurizing mechanism 44, such as a positive pressure pump, may be employed to facilitate the flow of fluid along the pathway 43. As the fluid is introduced through the inlet 165, the tangential placement of the inlet 165 relative to the plenum 16 causes the fluid to flow along the wall of the plenum 16 circumferentially about the column 12, thereby imparting a cyclonic flow within the plenum 16. The cyclonic flow within plenum 16 continues downward toward the annulus 19, and causes the fluid to be uniformly distributed through the annulus 19 and upward into the interior chamber 13 of column 12.

In the biological treatment of fluid, such as aquaculture fluid, the fluidizing reactor 10 may be provided with a bed of treatment material 134 at a bottom portion 135 of the interior chamber 13. The treatment material 134, in one embodiment, can be a granular medium having a higher density relative to that of the fluid to be treated and its contents. For instance, the treatment material 134 may be sand. Of course, other treatment material 134 may be used, so long as the material provides sufficient surface area for use as a habitat by, for example, specialized microorganisms (e.g., bacteria) to grow thereon, and to treat the fluid flowing through the material. For instance, the bacteria may oxidize toxic ammonia excreted in the biomass in the fluid, and convert it into non-toxic substances. It should be appreciated that the type of microorganism permitted to populate the surface area of each granule in the bed of treatment material will generally depend on the nutrient level or content of the fluid to be treated, and will generally determine the type of biological treatment process to be carried out.

As fluid moves across the annulus 19, in one embodiment, the fluid is distributed uniformly and upwardly by the cyclonic pattern, through the granular treatment medium 134, and toward the center of the interior chamber 13, while following a generally plug-flow pattern, so as to fluidize the bed of treatment medium 134. In order to fluidize the bed of treatment medium 134, the velocity at which the fluid to be treated should be introduced through the bottom of the treatment medium 134 is preferrably one which is sufficient to cause a homogenous expansion of the bed of treatment medium 134 with minimal turbulence along its upper surface 136. In other words, the velocity of the flow should be such that the fluid is capable of lifting and suspending the granules of the bed within the interior chamber 13 to increase, by exposure, the amount of surface area of the bed, for the fluid to be treated as it travels therethrough. As illustrated in Fig. 2A, the bed of treatment material 134, once fluidized, becomes a viscous, fluid bed with a clearly defined volume within the interior chamber 13. This clearly defined volume is generally greater than that of a static bed of treatment material. Accordingly, by employing a uniform cyclonic flow pattern, as illustrated in Fig. 2B, the bed of granular treatment medium 134 can be homogenously fluidized with little or no "dead" spots within the bed, wherein the treatment material 134 remains static and compact. This, as it will be appreciated, can contribute to the provision of a more hospitable environment within which the microorganisms may flourish, and can lead to an increase in, for instance, the nitrification or denitrification (depending on the treatment) rate per unit volume of reactor space.

Once the fluid, now treated, has reached the upper portion 133 of the interior chamber 13, the treated fluid may get pushed through the outlet 123 by fluid flow upward from the bottom portion 135 of the interior chamber 13. In connection with the removal of the treated fluid from within the interior chamber 13, a pressuring mechanism (not shown) may be provided for pressurizing the fluid within the chamber 13, so as to facilitate the removal of the treated fluid. In one embodiment, the pressuring mechanism may be a lid 141 positioned across the top end 14 of the column 12. Alternatively, the pressurizing mechanism may be a positive pressure pump, or may include both a lid and a pump. As the treated fluid leaves through the outlet 123, it travels along a second pathway 45; and, because the system 40 utilized is discussed in the context of a closed system, the fluid gets deposited back into the source 42. Such a closed system utilizing a fluidizing reactor 10 with a bed of treatment medium 134 may have large scale utility, for example, in the fish farming industry, for nitrification or denitrification of the fluid used to hold the fish. The closed system may also be used for recirculating water used in a pet fish tank or fish pond. Of course, the fluidizing reactor 10 must be scaled accordingly for the different applications. The system 40 described herein may also be used for various chemical treatments, for instance, for ion exchange to control the pH level of the fluid. In such a treatment, the treatment medium 134 may need to be modified from that used in the biological treatment to include retention of compounds within the bed which can facilitate ion exchange.

In an alternate embodiment, the system 40 may operate as an open system. Still referring to Fig. 4, the open system may include a source 42 within which fluid to be treated is maintained. Fluid from the source 42 may be directed to the fluidizing reactor 46 by way of pathway 47. However, after the fluid leaves the reactor 46 along pathway 48, unlike the closed system above, the open system described herein does not deposit the treated fluid back into the source 42. Rather, the treated fluid gets deposited into a receptor 49, such as a holding tank or a pond, that is spatially positioned away from the source 42. The open system may be useful in replenishing natural bodies of water with treated fluid which previously may have been contaminated with foreign particulates.

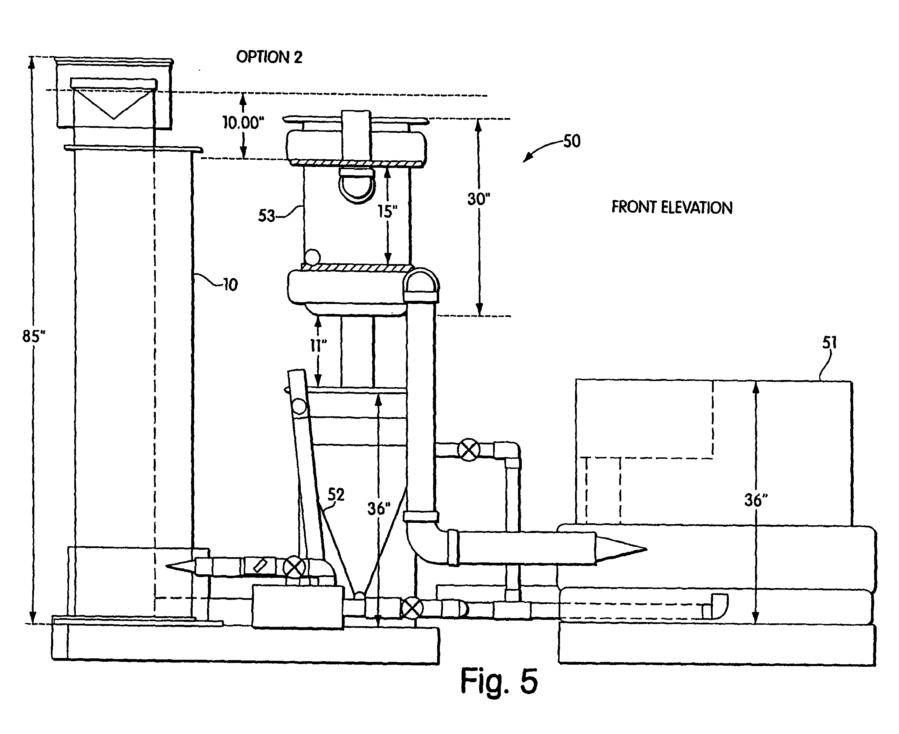

In addition to being used independently, the fluidizing reactor 10 of the present invention may be part of a system which includes multiple fluidizing reactors 10, 46 and 47, such as that shown in Fig. 4. In the system 40 shown in Fig. 4, a fluidizing reactor 47 may be provided to treat water received from the city well 41. The treated water may subsequently be fed along pathway 48 to, for instance, culture tank 42 for maintaining fish. As discussed above, this portion of the system 40 may include fluidizing reactor 10 as part of a closed loop system. Treated water from fluidizing reactor 47 may also be diverted to other closed loop systems 49 . The closed loop systems 47 and 49 may be configured to divert some of the fluid from the source/receptor, such as culture tank 42, to fluidizing reactor 46, which reactor is part of an open loop in system 40, for post treatment prior to returning the treated water to a natural body of water, such as lagoon 49. The configuration provided in Fig. 4 is but one possible design for system 40. However, it should be understood that other configurations and/or modifications of the system 40 utilizing multiple fluidizing reactors may be employed to meet specific application needs. Moreover, the fluidizing reactor 10, as shown in Fig. 5, may be utilized, in accordance with one embodiment, as part of system 50, wherein fluidizing reactor 10 is in fluid communication with other fluid treatment devices, for example, a device 51 or 52 to permit settling of solids from liquid, a device 52 for separating solids from liquid, a device 53 for removing carbon dioxide (CO₂), and a device to permit removal of solids from liquid.

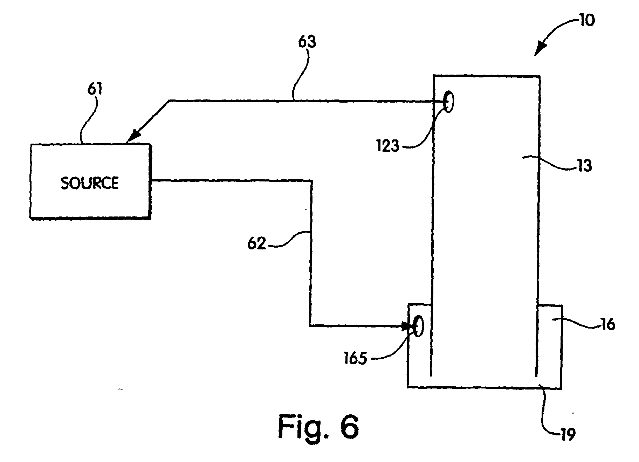

In accordance with another embodiment of the present invention, the fluidizing reactor 10 may be employed as a reactor chamber for the mixing and blending of various agents, for example, liquid with liquid, or liquid with solid. When utilized as a reactor chamber, the fluidizing reactor 10 may be used as a continuous process reactor vessel or a batch mixing reactor vessel. In the embodiment wherein the fluidizing reactor 10 is employed as a continuous process reactor vessel, the reactor 10 is configured to be part of a closed recirculating system 60, as illustrated in Fig. 6. The system 60 may include a source 61 containing various agents to be treated. The system may be provided with a number of sources, each containing an agents to be treated, if so desired.

As shown in Fig. 6, the agents contained within the source 61 may be metered and directed into the plenum 16 of the reactor 10 through the inlet 165 by way of pathway 62. Once within the plenum 16, the agents are subject to a cyclonic flow pattern, after which they are introduced into the interior chamber 13 of the reactor 10 through the annulus 19. When utilized as a mixing and blending vessel, the reactor 10 does not include a bed of treatment medium. Instead the agents are permitted to proceed along the cyclonic flow pattern within the interior chamber 13 for continual mixing and blending until the level within the interior chamber 13 reaches that of the outlet 123. Thereafter, the mixed product is permitted to exit through the outlet 123, where subsequently it may be redirected back into the source 61 along pathway 63 for additional mixing and blending if necessary. Once the desired mixing condition has been achieved, the process is stop and the mixed product removed from the reactor 10.

In the embodiment wherein the fluidizing reactor 10 is employed as a batch-mixing reactor vessel, the pathway 63 of the system 60 may be modified to lead the mixed product away from the reactor 10 into a receptor (not shown) different from the source 61. By collecting the mixed product in a different receptor, the mixed product in the batch-mixing process is not subject to remixing.

The system 60, which utilizes the fluidizing reactor 10 as a mixing and blending vessel absent a bed of treatment medium, may have many different applications. Some of the applications include, but are not limited to, acid mine neutralization of contaminated fluid generated during the metal mining process, industrial and chemical neutralization of acid baths used in the steel coating process, mixing and blending of medicine in the pharmaceutical industry, mixing and blending used for pigments and dyes, and mixing and blending used in agricultural chemicals.

In accordance with another embodiment of the present invention, the fluidizing reactor 10 may be modified for use as a filtration unit. Referring again to Fig. 2A, fluid to be treated may be introduced through outlet 123 into the upper portion 133 of the interior chamber 13. When additional fluid is introduced into the interior chamber 13, the fluid within the interior chamber 13 is pushed downward into the bed of granular material 134. As the fluid travels through the bed of granular material 134 toward the bottom portion 135, the bed of granular material 134 gets compacted and acts as a filter to trap and remove particulates within the fluid. The fluid exiting the bed of granular material 134 may thereafter be directed through the annulus 19 and into the plenum 16 and removed through the inlet 165. Configuration of the reactor 10 as a filtration unit may prove useful for different applications carried out in industries where liquid filtration may be required.

While the invention has been described in connection with the specific embodiments thereof, it will be understood that it is capable of further modification. Furthermore, this application is intended to cover any variations, uses, or adaptations of the invention, including such departures from the present disclosure as come within known or customary practice in the art to which the invention pertains, and as fall within the scope of the appended claims.

## Claims

1. A fluidizing reactor (10) comprising:
a column (12) having an interior chamber (13) extending between a first end (14) and a second end of the column (15);
a plenum (16) situated circumferentially about the second end (15) of the column (12) the plenum having a lower end (17);
an annulus (19) defined by the second end of the column (15) and the lower end of the plenum (17) through which fluid from the plenum flows upwardly into the interior chamber (13) of the column; and
a fluid inlet (165) in communication with the plenum (16) and through which fluid is introduced;
**characterized in that**
the plenum (16) or inlet (165) are designed to direct the fluid circumferentially about the plenum towards the annulus (19).

2. A fluidizing reactor as set forth in claim 1, wherein the column (12) is substantially cylindrical along its entire length.

3. A fluidizing reactor as set forth in claim 1 or 2, wherein the plenum (16) is situated circumferentially about an outer surface of the column (12), and a lower surface extends across the lower end of the plenum.

4. A fluidizing reactor as set forth in any preceding claim, wherein the plenum (16) is situated circumferentially about the interior chamber (13) of the column (12), and a lower surface extends across the second end of the column (15).

5. A fluidizing reactor as set forth in any preceding claim, wherein the lower end of the plenum (17) includes a flow director (191) for directing fluid flow from the annulus toward a center of the column (12).

6. A fluidizing reactor as set forth in any preceding claim, wherein fluid flowing through the annulus (19) from the plenum (16) approximates a plug-flow pattern, in which the fluid flows uniformly upward cross-sectionally along the column (12).

7. A fluidizing reactor as set forth in any preceding claim, wherein fluid exiting through the plenum (16) has a velocity higher than the velocity of fluid within the plenum (16).

8. A fluidizing reactor as set forth in any preceding claim, wherein the fluid inlet (165) is in tangential communication with the plenum, (16), such that fluid introduced to the plenum (16) via the fluid inlet (165) flows circumferentially about the plenum (16), through the annulus (19), and upwardly into the interior chamber (13) of the column.

9. A fluidizing reactor as set forth in any preceding claim, further including a deflector (131) positioned in axial alignment within the interior chamber and adjacent the annulus (19), so as to enhance fluid flow from the annulus upwardly and toward a center of the interior chamber (13).

10. A fluidizing reactor as set forth in claim 9, wherein the deflector (131) is conical having a rising gradient which terminates in an apex at the center of the column (12).

11. A fluidizing reactor as set forth in any preceding claim, further including a bed of granular material substantially denser than the fluid within the chamber.

12. A fluidizing reactor as set forth in claim 11, wherein the bed of granular material is of a sufficient height, such that fluid flowing through the annulus (19) causes a homogenous expansion of the bed, so as to generate a suspension of the granular material with minimal turbulence along an upper surface of the bed.

13. A fluidizing reactor as set forth in any preceding claim, further including an outlet (123) in communication with the interior chamber (13) of the column (12) and through which fluid moving upwardly from within the interior chamber may be removed therefrom.

14. A fluidizing reactor as set forth in claim 13, further including an upper enclosure (141) extending across the first end of the column (14), so as to pressurize the fluid within the reactor to facilitate advancement of fluid through the outlet to a level higher than the level of the outlet.

15. A method for treatment of fluid, the method comprising:
providing a fluidizing reactor (10) for receiving fluid to be treated from a source, (61) the reactor comprising a column (12) having an interior chamber (13) extending longitudinally along the column, a plenum (16) situated circumferentially about a bottom end of the column, an annulus defined by the bottom end of the column (17) and a lower end of the plenum for fluid communication between the plenum and the interior chamber of the column, an inlet (165) for introducing fluid from the source into the plenum, the plenum (16) or inlet (165) being designed to direct the fluid circumferentially about the plenum towards the annulus (19), and an outlet (123) for removal of fluid from within the interior chamber;
introducing the fluid from the source through the inlet and into the plenum;
directing the fluid circumferentially about the plenum toward the annulus;
permitting the fluid to exit from the plenum through the annulus and into the interior chamber;
subjecting the fluid to an upward flow from a bottom portion of the interior chamber, through a bed of treatment material positioned at a bottom portion of the interior chamber, to an upper portion of the interior chamber; and
removing the fluid treated from the upper portion of the interior chamber through the outlet.

16. A method as set forth in claim 15, wherein the step of introducing includes imparting a tangential flow to the fluid as it enters the plenum (16).

17. A method as set forth in claim 15 or 16, wherein the step of imparting includes generating a circumferential flow as the fluid moves along within the plenum (16).

18. A method as set forth in any of claims 15 to 17, wherein the step of permitting includes deflecting the fluid, so as to enhance fluid flowing from the annulus (19) upwardly and toward a center of the interior chamber (13).

19. A method as set forth in any of claims 15 to 18, wherein the step of subjecting includes allowing the fluid to move upwardly in a plug-flow pattern, in which the fluid flows uniformly upward cross-sectionally through the bed of material and the interior chamber (13).

20. A method as set forth in claim 19, wherein the step of allowing includes causing a homogenous expansion of the bed, so as to generate a suspension of the bed material with minimal turbulence along an upper surface of the bed.

21. A method as set forth in any of claims 15 to 20, wherein the step of removing includes generating a positive pressure within the interior chamber (13), so as to facilitate removal of fluid from the outlet (123).

22. A method as set forth in claim 21, wherein the step of generating includes advancing fluid removed from the outlet (123) to a level higher than the level of the outlet.

23. A method as set forth in any of Claims 15 to 22 wherein the bed comprises granular treatment material.

## Patentansprüche

1. Fließbettreaktor (10), der folgendes umfasst:
eine Säule (12), die eine innere Kammer (13) aufweist, die sich zwischen einem ersten Ende (14) und einem zweiten Ende (15) der Säule erstreckt;
eine Vorkammer (16), die entlang des Umfangs um das zweite Ende (15) der Säule (12) angeordnet ist, wobei die Vorkammer ein unteres Ende (17) aufweist;
einen Ringspalt (19), der durch das zweite Ende (15) der Säule und das untere Ende (17) der Vorkammer abgegrenzt wird, durch welchen Flüssigkeit von der Vorkammer nach oben in die innere Kammer (13) der Säule hinein fließt; und
einen Flüssigkeitseinlass (165), der mit der Vorkammer (16) in Verbindung steht und durch den Flüssigkeit eingeleitet wird;
**dadurch gekennzeichnet, dass**
die Vorkammer (16) oder der Einlass (165) so entworfen sind, dass sie die Flüssigkeit entlang des Umfangs um die Vorkammer zum Ringspalt (19) hin leitet.

2. Fließbettreaktor nach Anspruch 1, wobei die Säule (12) entlang ihrer gesamten Länge im Wesentlichen zylindrisch ist.

3. Fließbettreaktor nach Anspruch 1 oder 2, wobei die Vorkammer (16) entlang dem Umfang um eine äußere Oberfläche der Säule (12) angeordnet ist und sich eine untere Oberfläche über das untere Ende der Vorkammer erstreckt.

4. Fließbettreaktor nach einem der voran stehenden Ansprüche, wobei die Vorkammer (16) entlang des Umfangs um die innere Kammer (13) der Säule (12) angeordnet ist und sich eine untere Oberfläche über das zweite Ende (15) der Säule erstreckt.

5. Fließbettreaktor nach einem der voran stehenden Ansprüche, wobei das untere Ende (17) der Vorkammer einen Strömungsdirektor (191) zum Leiten der Flüssigkeitsströmung vom Ringspalt zu einer Mitte der Säule (12) hin zu leiten.

6. Fließbettreaktor nach einem der voran stehenden Ansprüche, wobei sich Flüssigkeit, die durch den Ringspalt (19) aus der Vorkammer (16) fließt, einem Pfropfenströmungsmuster annähert, bei dem die Flüssigkeit gleichmäßig querschnittweise entlang der Säule (12) nach oben fließt.

7. Fließbettreaktor nach einem der voran stehenden Ansprüche, wobei die durch die Vorkammer (16) austretende Flüssigkeit eine Geschwindigkeit besitzt, die größer ist als die Geschwindigkeit der Flüssigkeit innerhalb der Vorkammer (16).

8. Fließbettreaktor nach einem der voran stehenden Ansprüche, wobei der Flüssigkeitseinlass (165) in tangentialer Verbindung zur Vorkammer (16) steht, so dass die über den Flüssigkeitseinlass (165) in die Vorkammer (16) eingeleitete Flüssigkeit entlang dem Umfang um die Vorkammer (16) durch den Ringspalt (19) und nach oben in die innere Kammer (13) der Säule hinein fließt.

9. Fließbettreaktor nach einem der voran stehenden Ansprüche, der darüber hinaus einen Deflektor (131) enthält, der in axialer Ausrichtung innerhalb der inneren Kammer und an den Ringspalt (19) angrenzend angeordnet ist, um dadurch die Flüssigkeitsströmung vom Ringspalt nach oben und zu einer Mitte der inneren Kammer (13) hin zu verstärken.

10. Fließbettreaktor nach Anspruch 9, wobei der Deflektor (131) konisch ist und einen ansteigenden Gradienten aufweist, der in einem Scheitelpunkt in der Mitte der Säule (12) endet.

11. Fließbettreaktor nach einem der voran stehenden Ansprüche, der darüber hinaus ein Bett aus einem körnigen Material enthält, das wesentlich dichter ist als die Flüssigkeit innerhalb der Kammer.

12. Fließbettreaktor nach Anspruch 11, wobei das Bett aus dem körnigen Material eine ausreichende Höhe besitzt, so dass die durch den Ringspalt (19) fließende Flüssigkeit eine gleichmäßige Ausdehnung des Bettes verursacht, um dadurch eine Suspension des körnigen Materials mit minimaler Turbulenz entlang einer oberen Oberfläche des Bettes zu erzeugen.

13. Fließbettreaktor nach einem der voran stehenden Ansprüche, der darüber hinaus einen Auslass (123) enthält, der mit der inneren Kammer (13) der Säule (12) in Verbindung steht und durch den die Flüssigkeit, die sich aus dem Inneren der inneren Kammer nach oben bewegt, daraus entfernt werden kann.

14. Fließbettreaktor nach Anspruch 13, der darüber hinaus eine obere Abdeckung (141) enthält, die sich über das erste Ende (14) der Säule erstreckt, so dass die Flüssigkeit innerhalb des Reaktors unter Druck gesetzt wird, um die Fortbewegung der Flüssigkeit durch den Auslass zu einem Niveau zu erleichtern, das höher liegt als das Niveau des Auslass.

15. Verfahren zur Behandlung von Flüssigkeit, wobei das Verfahren folgendes umfasst:
Bereitstellen eines Fließbettreaktors (10) zur Aufnahme von zu behandelnder Flüssigkeit von einer Quelle (61), wobei der Reaktor eine Säule (12) umfasst, die eine innere Kammer (13) aufweist, die sich längs entlang der Säule erstreckt, ferner eine Vorkammer (16), die entlang dem Umfang um ein unteres Ende der Säule angeordnet ist, ferner einen Ringspalt, der durch das untere Ende (17) der Säule und einem unteren Ende der Vorkammer abgegrenzt wird, zur Fließverbindung zwischen der Vorkammer und der inneren Kammer der Säule, ferner einen Einlass (165) zum Einlassen von Flüssigkeit aus der Quelle in die Vorkammer, wobei die Vorkammer (16) oder der Einlass (165) so entworfen sind, dass sie die Flüssigkeit entlang dem Umfang um die Vorkammer zum Ringspalt (19) hin leiten, und ferner einen Auslass (123) zum Entfernen von Flüssigkeit aus dem Inneren der inneren Kammer;
Einlassen der Flüssigkeit aus der Quelle durch den Einlass und in die Vorkammer hinein;
Leiten der Flüssigkeit entlang des Umfangs um die Vorkammer hin zum Ringspalt;
Gestatten der Flüssigkeit, aus der Vorkammer durch den Ringspalt und in die innere Kammer hinein auszutreten;
Aussetzen der Flüssigkeit einer Strömung nach oben aus einem unteren Abschnitt der inneren Kammer durch ein Bett eines Behandlungsmaterials, das an einem unteren Abschnitt der inneren Kammer angeordnet ist, zu einem oberen Abschnitt der inneren Kammer; und
Entfernen der behandelten Flüssigkeit aus dem oberen Abschnitt der inneren Kammer durch den Auslass.

16. Verfahren nach Anspruch 15, wobei der Schritt des Einlassens einschließt, der Flüssigkeit eine tangentiale Strömung zu erteilen, sowie sie in die Vorkammer (16) eintritt.

17. Verfahren nach Anspruch 15 oder 16, wobei der Schritt des Erteilens die Erzeugung einer Strömung entlang dem Umfang einschließt, sowie sich die Flüssigkeit entlang dem Inneren der Vorkammer (16) bewegt.

18. Verfahren nach einem der Ansprüche 15 bis 17, wobei der Schritt des Gestattens das Ablenken der Flüssigkeit einschließt, um dadurch die Flüssigkeitsströmung aus dem Ringspalt (19) nach oben zu einer Mitte der inneren Kammer (13) hin zu verstärken.

19. Verfahren nach einem der Ansprüche 15 bis 18, wobei der Schritt des Aussetzens einschließt, es der Flüssigkeit zu erlauben, sich in einem Pfropfenströmungsmuster nach oben zu bewegen, bei dem die Flüssigkeit gleichmäßig querschnittweise nach oben durch das Materialbett und die innere Kammer (13) fließt.

20. Verfahren nach Anspruch 19, wobei der Schritt des Erlaubens das Veranlassen einer homogenen Ausdehnung des Betts einschließt, um dadurch eine Suspension des Bettmaterials mit einer minimalen Turbulenz entlang einer oberen Oberfläche des Betts zu erzeugen.

21. Verfahren nach einem der Ansprüche 15 bis 20, wobei der Schritt des Entfernens das Erzeugen eines positiven Drucks innerhalb der inneren Kammer (13) beinhaltet, um dadurch das Entfernen der Flüssigkeit aus dem Auslass (123) zu erleichtern.

22. Verfahren nach Anspruch 21, wobei der Schritt des Erzeugens das Fortbewegen von Flüssigkeit aus dem Auslass (123) auf ein Niveau einschließt, das höher liegt als das Niveau des Auslass.

23. Verfahren nach einem der Ansprüche 15 bis 22, wobei das Bett ein körniges Behandlungsmaterial umfasst.

## Revendications

1. Réacteur à fluidisation (10), comportant :
une colonne (12) ayant un chambre intérieure (13) s'étendant entre une première extrémité (14) et une seconde extrémité de la colonne (15) ;
un collecteur (16) situé circonférentiellement autour de la seconde extrémité (15) de la colonne (12), le collecteur ayant une extrémité inférieure (17) ;
un espace annulaire (19) défini par la seconde extrémité de la colonne (15) et l'extrémité inférieure du collecteur (17) à travers lequel un fluide provenant du collecteur s'écoule vers le haut jusque dans la chambre intérieure (13) de la colonne ; et
une entrée de fluide (165) en communication avec le collecteur (16), et à travers laquelle le fluide est introduit ;
**caractérisé en ce que**
le collecteur (16) ou l'entrée (165) sont conçus pour diriger le fluide circonférentiellement autour du collecteur vers l'espace annulaire (19).

2. Réacteur à fluidisation selon la revendication 1, dans lequel la colonne (12) est sensiblement cylindrique sur toute sa longueur.

3. Réacteur à fluidisation selon la revendication 1 ou 2, dans lequel le collecteur (16) est situé circonférentiellement autour d'une surface extérieure de la colonne (12), et une surface inférieure s'étend en travers de l'extrémité inférieure du collecteur.

4. Réacteur à fluidisation selon l'une quelconque des revendications précédentes, dans lequel le collecteur (16) est situé circonférentiellement autour de la chambre intérieure (13) de la colonne (12), et une surface inférieure s'étend en travers de la seconde extrémité de la colonne (15).

5. Réacteur à fluidisation selon l'une quelconque des revendications précédentes, dans lequel l'extrémité inférieure du collecteur (17) comporte un dispositif de direction d'écoulement (191) pour diriger un écoulement de fluide de l'espace annulaire vers un centre de la colonne (12).

6. Réacteur à fluidisation selon l'une quelconque des revendications précédentes, dans lequel du fluide s'écoulant à travers l'espace annulaire (19) à partir du collecteur (16) s'approche d'un motif d'écoulement-bouchon, dans lequel le fluide s'écoule uniformément vers le haut en section transversale le long de la colonne (12).

7. Réacteur à fluidisation selon l'une quelconque des revendications précédentes, dans lequel le fluide sortant à travers le collecteur (16) a une vitesse plus élevée que la vitesse du fluide à l'intérieur du collecteur (16).

8. Réacteur à fluidisation selon l'une quelconque des revendications précédentes, dans lequel l'entrée de fluide (165) est en communication tangentielle avec le collecteur (16), de telle sorte que le fluide introduit vers le collecteur (16) via l'entrée de fluide (165) s'écoule circonférentiellement autour du collecteur (16), à travers l'espace annulaire (19), et vers le haut jusque dans la chambre intérieure (13) de la colonne.

9. Réacteur à fluidisation selon l'une quelconque des revendications précédentes, comportant de plus un déflecteur (131) positionné en alignement axial à l'intérieur de la chambre intérieure et adjacent à l'espace annulaire (19), de manière à améliorer un écoulement de fluide de l'espace annulaire vers le haut et en direction d'un centre de la chambre intérieure (13).

10. Réacteur à fluidisation selon la revendication 9, dans lequel le déflecteur (131) a une forme conique ayant une pente ascendante qui se termine en un sommet au centre de la colonne (12).

11. Réacteur à fluidisation selon l'une quelconque des revendications précédentes, comportant de plus un lit de matériau granulaire sensiblement plus dense que le fluide à l'intérieur de la chambre.

12. Réacteur à fluidisation selon la revendication 11, dans lequel le lit de matériau granulaire est d'une hauteur suffisante pour que le fluide s'écoulant à travers l'espace annulaire (19) provoque une dilatation homogène du lit, de manière à générer une suspension du matériau granulaire avec une turbulence minimale le long d'une surface supérieure du lit.

13. Réacteur à fluidisation selon l'une quelconque des revendications précédentes, comportant de plus une sortie (123) en communication avec la chambre intérieure (13) de la colonne (12) et à travers laquelle le fluide se déplaçant vers le haut à partir de l'intérieur de la chambre intérieure peut être enlevé de celui-ci.

14. Réacteur à fluidisation selon la revendication 13, comportant de plus une enceinte supérieure (141) s'étendant en travers de la première extrémité de la colonne (14), de manière à mettre sous pression le fluide à l'intérieur du réacteur pour faciliter l'avance de fluide à travers la sortie jusqu'à un niveau plus élevé que le niveau de la sortie.

15. Procédé de traitement d'un fluide, le procédé comportant les étapes consistant à :
fournir un réacteur à fluidisation (10) pour recevoir un fluide devant être traité à partir d'une source (61), le réacteur comportant une colonne (12) ayant une chambre intérieure (13) s'étendant longitudinalement le long de la colonne, un collecteur (16) situé circonférentiellement autour d'une extrémité inférieure de la colonne, un espace annulaire défini par l'extrémité inférieure de la colonne (17) et une extrémité inférieure du collecteur pour une communication de fluide entre le collecteur et la chambre intérieure de la colonne, une entrée (165) pour introduire un fluide à partir de la source jusque dans le collecteur, le collecteur (16) ou l'entrée (165) étant conçu(e) pour diriger le fluide circonférentiellement autour du collecteur vers l'espace annulaire (19), et une sortie (123) pour enlever du fluide de l'intérieur de la chambre intérieure ;
introduire le fluide à partir de la source à travers l'entrée et jusque dans le collecteur ;
diriger le fluide circonférentiellement autour du collecteur vers l'espace annulaire ;
permettre au fluide de sortir du collecteur à travers l'espace annulaire et jusque dans la chambre intérieure ;
soumettre le fluide à un écoulement vers le haut à partir d'une partie inférieure de la chambre intérieure, à travers un lit de matériau de traitement positionné à une partie inférieure de la chambre intérieure, vers une partie supérieure de la chambre intérieure ; et
enlever le fluide traité de la partie supérieure de la chambre intérieure à travers la sortie.

16. Procédé selon la revendication 15, dans lequel l'étape d'introduction comporte l'étape consistant à imprimer un écoulement tangentiel au fluide lorsqu'il entre dans le collecteur (16).

17. Procédé selon la revendication 15 ou 16, dans lequel l'étape consistant à imprimer comporte l'étape consistant à générer un écoulement circonférentiel lorsque le fluide se déplace à l'intérieur du collecteur (16).

18. Procédé selon l'une quelconque des revendications 15 à 17, dans lequel l'étape consistant à permettre comporte l'étape consistant à dévier le fluide, de manière à améliorer l'écoulement de fluide de l'espace annulaire (19) vers le haut et en direction d'un centre de la chambre intérieure (13).

19. Procédé selon l'une quelconque des revendications 15 à 18, dans lequel l'étape de soumission comporte l'étape consistant à autoriser le fluide à se déplacer vers le haut selon un motif d'écoulement-bouchon, dans lequel le fluide s'écoule de manière uniforme vers le haut en section transversale à travers le lit de matériau et la chambre intérieure (13).

20. Procédé selon la revendication 19, dans lequel l'étape d'autorisation comporte l'étape consistant à provoquer une dilation homogène du lit, de manière à générer une suspension du matériau de lit avec une turbulence minimale le long d'une surface supérieure du lit.

21. Procédé selon l'une quelconque des revendications 15 à 20, dans lequel l'étape d'enlèvement comporte l'étape consistant à générer une pression positive dans la chambre intérieure (13), de manière à faciliter l' enlèvement de fluide de la sortie (123).

22. Procédé selon la revendication 21, dans lequel l'étape consistant à générer comporte l'étape consistant à faire avancer du fluide enlevé de la sortie (123) vers un niveau plus élevé que le niveau de la sortie.

23. Procédé selon l'une quelconque des revendications 15 à 22, dans lequel le lit comporte un matériau de traitement granulaire.
